# EUROPEAN PATENT APPLICATION

(11) **EP 4 421 585 A1**
(43) Date of publication of application: **28.08.2024**
(21) Application number: 22906279.9
(22) Date of filing: 02.12.2022
(51) Int. Cl.: G06F 1/16

(54) **ELECTRONIC DEVICE**

(30) Priority: 14.12.2021 CN 202123136326 U
(71) Applicant: Huawei Technologies Co., Ltd., Shenzhen, Guangdong 518129 (CN)
(72) Inventor: LIU, Zhigang, Shenzhen, Guangdong 518129 (CN); LI, Yanyu, Shenzhen, Guangdong 518129 (CN)
(74) Representative: Pfenning, Meinig & Partner mbB
(86) International application number: PCT/CN2022/136152
(87) International publication number: WO 2023/109529

(57) **Abstract**

This application provides an electronic device. The electronic device includes a housing, a screen assembly, a cover, and a camera module. The screen assembly and the camera module are disposed in the housing, the cover is fastened to the housing and covers the screen assembly, the cover is provided with an embedding structure, and a part of the camera module extends into the embedding structure. In this application, the embedding structure is disposed on the cover, so that a part of one end that is of the camera module and that is away from the housing may extend into the embedding structure. In this way, the cover and the screen assembly can move in a direction toward the housing as a whole in a case in which a size of the camera module is not changed, so that a thickness of a screen is reduced.

## Description

This application claims priority to Chinese Patent Application No. 202123136326.1, filed with the China National Intellectual Property Administration on December 14, 2021 and entitled "ELECTRONIC DEVICE", which is incorporated herein by reference in its entirety.

### TECHNICAL FIELD

This application relates to the field of electronic terminal technologies, and in particular, to an electronic device.

### BACKGROUND

With development of the times, consumers have increasingly high requirements for lightness, thinness, and portability of electronic devices. A camera module is one of important factors that affect a thickness of a screen of an electronic device. Currently, most manufacturers are committed to compressing an overall thickness of a camera module. However, unlimited compression of the overall thickness of the camera module causes poor photographing effect and a large amount of noise.

### SUMMARY

An objective of this application is to provide an electronic device, to resolve a problem that compressing a thickness of a camera module causes poor photographing effect and a large amount of noise.

This application provides an electronic device. The electronic device includes a housing, a screen assembly, a cover, and a camera module. The screen assembly and the camera module are disposed in the housing, the cover is fastened to the housing and covers the screen assembly, the cover is provided with an embedding structure, and a part of the camera module extends into the embedding structure.

The embedding structure may be structures such as a hole or a groove. One end of the camera module may be fastened to the housing, and a part of one end that is of the camera module and that is away from the housing may extend into the embedding structure. In this way, the cover and the screen assembly can move in a direction toward the housing as a whole in a case in which a size of the camera module is not changed, so that a thickness of a screen is reduced.

In a possible implementation, the embedding structure is a through hole, the end that is of the camera module and that is away from the housing extends into the through hole, and an end face of the end that is of the camera module and that is away from the housing is flush with a surface of a side that is of the cover and that is away from the housing.

The end face of the end that is of the camera module and that is away from the housing can be flush with the surface of the side that is of the cover and that is away from the housing. In this way, the camera module can be prevented from protruding from the surface of the cover and being easily damaged and therefore visual effect is prevented from being affected, and it is also ensured that the thickness of the screen is reduced to a maximum degree in a case in which the camera module does not protrude from the surface of the cover.

In a possible implementation, a protection structure is further included, where the protection structure is fastened to the embedding structure, and covers the end that is of the camera module and that is away from the housing; or the protection structure is fastened to one end face of the end that is of the camera module and that is away from the housing.

The protection structure can prevent substances, such as dust or liquid, in an external environment of the electronic device from polluting or damaging the camera module. The protection structure is in direct contact with the camera module, and covers or wraps an end face of one end that is of the camera module and that is configured to obtain an image, so that the camera module can be protected in a moving process of the camera module.

In a possible implementation, the embedding structure is a through hole, the through hole includes a first hole and a second hole, a diameter of the first hole is greater than a diameter of the second hole, the end that is of the camera module and that is away from the housing extends into the second hole, and the protection structure is fastened to the first hole.

Because the diameter of the first hole is greater than the diameter of the second hole, a step may be formed between the first hole and the second hole, and the protection structure may be fastened on the step. Specifically, the protection structure may be fastened and bonded to the step through adhesive bonding. This facilitates fastening of the protection structure.

In a possible implementation, a thickness of the protection structure is 0.1 mm, and a depth of the first hole is 0.2 mm. Therefore, there may be a height difference between a surface of a side that is of the protection structure and that is away from the step and the surface of the side that is of the cover and that is away from the housing, and the height difference can enable the protection structure to be accommodated in the first hole and to not protrude from the first hole. In this way, the protection structure can be protected.

In a possible implementation, the protection structure is a PET film. The PET film has good light transmittance, wear resistance, and water resistance, and is a soft material, so that the PET film can effectively protect the camera module.

In a possible implementation, the electronic device further includes an embedding member, and the protection structure is fastened to the embedding structure by using the embedding member. The embedding member can block a gap between the camera module and the through hole, to prevent substances such as liquid and dust in the external environment from entering. In addition, the embedding member can improve mounting stability of the camera module.

In a possible implementation, a flange is disposed on the embedding member, and the flange is fastened to a surface of one end that is of the cover and that faces the housing.

The embedding member may increase a contact area between the embedding member and the cover by using the flange, to improve reliability of fastening between the embedding member and the cover. The flange may be fastened to the cover through adhesive bonding.

In a possible implementation, the embedding structure is a groove, the groove is disposed at the end that is of the cover and that faces the camera module, and the end that is of the camera module and that is away from the housing extends into the groove.

A depth of the groove is less than a thickness of the cover. On one hand, the camera module extends into the groove, so that the thickness of the screen can be reduced. On the other hand, a part that is on the cover and that is located at the groove is not penetrated, so that the camera module can be protected.

In a possible implementation, the cover includes a first plate made of glass and a second plate made of plastic, the first plate and the second plate are fastened and assembled together, and the embedding structure is disposed on the second plate.

A structure assembling the first plate made of glass and the second plate made of plastic is used, so that the second plate made of plastic may be provided with the hole or the groove. In this way, operation difficulty is greatly reduced, and a qualification rate of the cover is significantly improved. The first plate and the second plate may be assembled and fastened by using processes such as adhesive bonding and fusing.

In a possible implementation, the cover is a glass cover, and the glass cover is glued to the screen assembly.

The screen assembly may be bonded to the glass cover in an area outside a display area of the screen assembly by using adhesive, so that the screen assembly and the glass cover form one integrated mechanical part. The integrated mechanical part may be integrally mounted on and fastened to the housing of the electronic device. This facilitates an assembling operation.

In a possible implementation, the camera module includes a support member, a lens, an image processing apparatus, and a circuit board, one end of the support member is mounted on the circuit board, the other end of the support member is provided with an opening, and a surrounding part of the opening forms a threaded recessed structure.

The threaded recessed structure may be a multi-ring circular structure surrounding the opening, and each ring of the circular structure is gradually recessed from an end face of the camera module to an inside of the camera module. In this way, relatively strong visual effect can be generated and user experience can be improved. In addition, a hollow-out structure may be formed between each ring structure, so that visual effect is improved, and a weight of the camera module may be reduced.

In a possible implementation, a material of the support member is metal. The support member made of metal can make an overall structure of the camera module more stable, and has relatively strong wear resistance. The material of the support member may be stainless steel.

It should be understood that the foregoing general descriptions and the following detailed descriptions are merely used as an example, and should not limit this application.

### BRIEF DESCRIPTION OF DRAWINGS

FIG. 1 is a partial sectional view of an electronic device having a photographing function in the conventional technology;
FIG. 2 is a partial sectional view (1) of an electronic device according to an embodiment of this application;
FIG. 3 is a partial sectional view (2) of an electronic device according to an embodiment of this application;
FIG. 4 is a partial view (in which a camera module is hidden) of FIG. 3;
FIG. 5 is a partial sectional view (3) of an electronic device according to an embodiment of this application;
FIG. 6 is a partial sectional view (4) of an electronic device according to an embodiment of this application;
FIG. 7 is a partial sectional view (5) of an electronic device according to an embodiment of this application;
FIG. 8 is a front view of a cover according to an embodiment in FIG. 7;
FIG. 9 is a front view of a cover according to another embodiment in FIG. 7;
FIG. 10 is a diagram of a structure of a camera module;
FIG. 11 is a diagram of a structure of a notebook computer; and
FIG. 12 is a partial enlarged diagram at A in FIG. 11.

### Reference numerals:

100: housing;
200: screen assembly;
300: cover;
400: camera module;
a: gap;
1: housing;
2: screen assembly;
3: cover;
31: embedding structure;
311: through hole;
312: first hole;
313: second hole;
314: step;
315: groove;
3a: first plate;
3b: second plate;
4: camera module;
41: circuit board;
42: support member;
421: opening;
422: accommodating cavity;
423: threaded recessed structure;
43: lens;
44: image processing apparatus;
5: adhesive layer;
6: protection structure;
7: embedding member;
71: flange;
b: thickness;
b 1: depth;
b2: depth;
c: depth.

The accompanying drawings herein are incorporated in this specification and constitute a part of this specification, to show embodiments conforming to this application, and are used together with this specification to explain a principle of this application.

### DESCRIPTION OF EMBODIMENTS

To make objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application.

In the descriptions of this application, unless otherwise specified and limited, the terms "first" and "second" are merely used for an objective of description, and shall not be understood as an indication or implication of relative importance. Unless otherwise specified or indicated, the term "a plurality of" means two or more. The terms, such as "connection" and "fixed", should be understood in a broad sense. For example, the "connection" may be a fixed connection, a detachable connection, an integral connection, or an electrical connection; may be a direct connection or an indirect connected through an intermediate medium. A person of ordinary skill in the art may interpret specific meanings of the foregoing terms in this application according to specific cases.

In descriptions of this specification, it should be understood that orientation words such as "above" and "below" described in embodiments of this application are described from perspectives shown in the accompanying drawings, and should not be construed as a limitation on embodiments of this application. Moreover, in the context, it also should be understood that, when it is mentioned that one element is connected "above" or "below" another element, the element can be directly connected "above" or "below" the another element, or may be indirectly connected "above" or "below" the another element through an intermediate element.

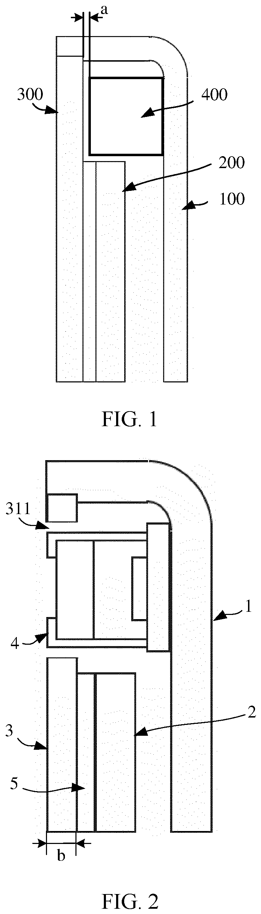

With development of the times, an increasing quantity of electronic devices have photographing functions, and the electronic devices having photographing functions tend to be increasingly thin. A camera module is one of main factors that affect a thickness of a PC screen. FIG. 1 is a partial sectional view of an electronic device having a photographing function in the conventional technology. As shown in FIG. 1, the existing electronic device having a photographing function usually includes a housing 100, a screen assembly 200, a cover 300, a camera module 400, and other functional components. The cover 300 is fastened to the housing 100, to seal the screen assembly 200 and the camera module 400 between the cover 300 and the housing 100, and a specific gap is maintained between the camera module 400 and the cover 300, so that the camera module 400 is prevented from squeezing the cover 300 due to tolerance accumulation of the components or an external force factor and therefore the cover 300 is prevented from being broken.

Currently, for the foregoing electronic device having a photographing function, because the camera module 400 is integrated between the cover 300 and the housing 100, and a specific gap a needs to be reserved between the camera module 400 and the cover 300, a thickness of a screen of the electronic device is relatively large. However, if a thickness of the camera module 400 is compressed to reduce the thickness of the screen, unlimited compression of the thickness of the camera module 400 causes worse photographing effect of the camera module 400, a large amount of noise, and other disadvantages.

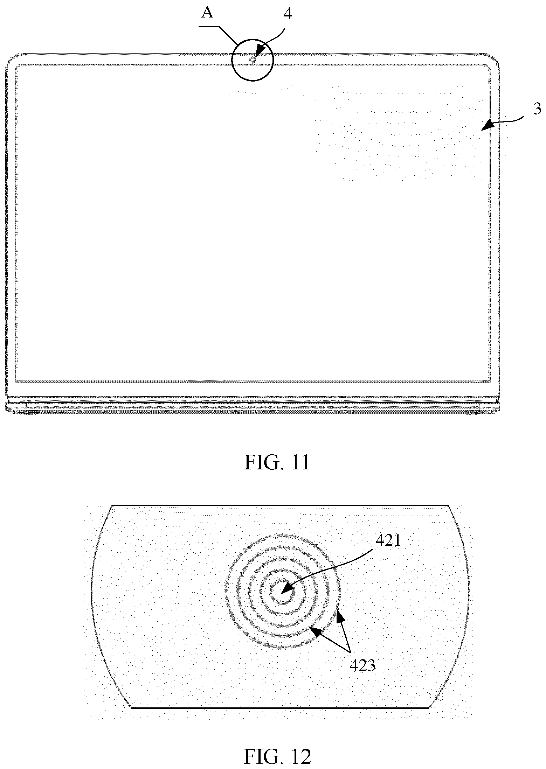

Therefore, an embodiment provides an electronic device. The electronic device may be a device that has a photographing function and has a thickness requirement, such as a desktop display, a notebook computer, a tablet computer, or a vehicle-mounted camera. In this embodiment, an example in which the electronic device is an ultra-thin notebook computer is used for description, as shown in FIG. 11.

As shown in FIG. 2 to FIG. 5, the electronic device provided in this embodiment of this application includes a housing 1, a screen assembly 2, a cover 3, and a camera module 4. The screen assembly 2 and the camera module 4 are disposed in the housing 1, the cover 3 is fastened to the housing 1 and covers the screen assembly 2, the cover 3 is provided with an embedding structure 31, and a part of the camera module 4 extends into the embedding structure 31.

The embedding structure 31 may be a hole, a groove, or another structure. One end of the camera module 4 may be fastened to the housing 1, and a part of one end that is of the camera module 4 and that is away from the housing 1 may extend into the embedding structure 31. In this way, the cover 3 and the screen assembly 2 can move in a direction toward the housing 1 as a whole in a case in which a size of the camera module 4 is not changed, so that a thickness of a screen is reduced.

It should be noted that a gap may be maintained between the camera module 4 and an edge of the embedding structure 31, and the gap may absorb tolerances accumulated by parts in the camera module 4, so that the camera module 4 is prevented from causing excessive pressure on the embedding structure 31 due to tolerance accumulation of the parts or an external force factor and therefore the cover 3 is prevented from being broken.

In this embodiment, the cover 3 may be a glass cover 3, and the glass cover 3 is glued to the screen assembly 2. The cover 3 made of glass has good light transmittance and wear resistance, so that user experience can be improved. The screen assembly 2 may be bonded to the glass cover 3 in an area outside a display area of the screen assembly 2 by using an adhesive layer 5, so that the screen assembly 2 and the glass cover 3 form one integrated mechanical part. The integrated mechanical part may be integrally mounted on and fastened to the housing 1 of the electronic device. This facilitates an assembling operation. Certainly, the screen assembly 2 may alternatively be first mounted, and then the glass cover 3 is fastened and bonded to the screen assembly 2 by using the adhesive layer 5.

In a specific implementation, as shown in FIG. 2, the embedding structure 31 is a through hole 311, the end that is of the camera module 4 and that is away from the housing 1 extends into the through hole 311, and an end face of the end that is of the camera module 4 and that is away from the housing 1 is flush with a surface of a side that is of the cover 3 and that is away from the housing 1.

The cover 3 may be provided with the through hole 311 through puncturing. During assembling of the electronic device, the camera module 4 may be first fastened to the housing 1, and then the screen assembly 2 and the glass cover 3 are mounted on the housing 1, so that the through hole 311 on the cover 3 is aligned with the camera module 4, and the end that is of the camera module 4 and that is away from the housing 1 can extend into the through hole 311. In this way, the thickness of the screen of the electronic device can be reduced. After the cover 3 is mounted, the end face of the end that is of the camera module 4 and that is away from the housing 1 can be flush with the surface of the side that is of the cover 3 and that is away from the housing 1. In this way, the camera module 4 can be prevented from protruding from the surface of the cover 3 and being easily damaged and therefore visual effect is prevented from being affected, and it is also ensured that the thickness of the screen is reduced to a maximum degree in a case in which the camera module 4 does not protrude from the surface of the cover 3.

It should be noted that, as shown in FIG. 1, in the existing electronic device having a photographing function, the cover 300 seals the camera module 400 between the cover 300 and the housing 100, and the gap a is reserved between the camera module 400 and the cover 300. The gap a is usually 0.2 mm, and a thickness of the cover 300 is usually 0.5 mm. Therefore, a distance between a surface of one end that is of the cover 300 and that is away from the housing 100 and a surface of one end that is of the camera module 400 and that is away from the housing 100 is 0.7 mm. In this embodiment, as shown in FIG. 2, the cover 3 is provided with the through hole 311, and the end face of the end that is of the camera module 4 and that is away from the housing 1 is flush with an end face of the end that is of the cover 3 and that is away from the housing 1. In this way, the existing 0.2 mm gap between the camera module 4 and the cover 3 is eliminated, and the cover 3 can further move a distance of the thickness b of the cover 3, namely, 0.5 mm, toward one side of the housing 1. Therefore, in the electronic device in this embodiment compared with that in the conventional solution, the cover 3 can move a distance of 0.7 mm toward the side of the housing 1, and the thickness of the screen of the electronic device is reduced in a case in which the size of the camera module 4 is not changed.

In addition, a length at which the end that is of the camera module 4 and that is away from the housing 1 extends into the through hole 311 may alternatively be less than an axial length of the through hole 311, to facilitate protection of the end face of the camera module 4. Alternatively, the end that is of the camera module 4 and that is away from the housing 1 may pass through the through hole 311 and protrude from the surface of the cover 3, so that the thickness of the screen of the electronic device is reduced to a maximum degree.

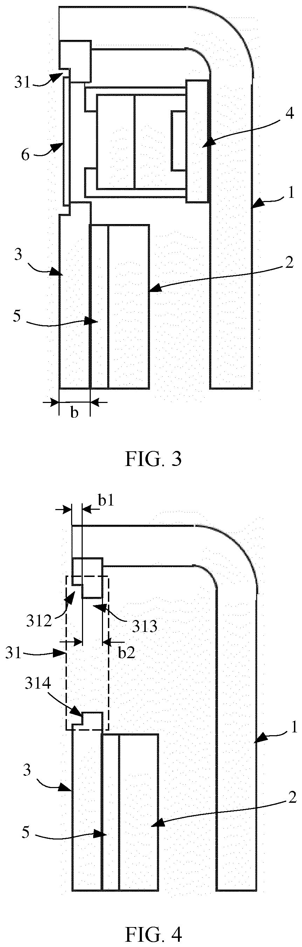

In a specific implementation, as shown in FIG. 3, the electronic device further includes a protection structure 6. The protection structure 6 is fastened to the embedding structure 31, and covers the end that is of the camera module 4 and that is away from the housing 1. The protection structure 6 may have good light transmittance, so that the camera module 4 can obtain an image through the protection structure 6. The protection structure 6 can prevent substances such as dust or liquid in an external environment of the electronic device from polluting or damaging the camera module 4. The protection structure 6 is fastened to the embedding structure 31, and is not directly in contact with the camera module 4. In other words, a specific safe distance is maintained between the camera module 4 and the protection structure 6. The safe distance may absorb tolerance accumulation of the components in the camera module 4, so that the camera module 4 is prevented from squeezing the protection structure 6 and therefore the protection structure 6 is prevented from being damaged.

In another specific implementation, the protection structure 6 may be fastened to the end face of the end that is of the camera module 4 and that is away from the housing 1. In this embodiment, the protection structure 6 may be in direct contact with the camera module 4, and cover or wrap an end face of one end that is of the camera module 4 and that is configured to obtain an image, to protect the camera module 4. The protection structure 6 may be fastened to the camera module 4 before the camera module 4 is mounted in the housing 1, so that the camera module 4 can be protected in a moving process of the camera module 4.

Specifically, the protection structure 6 may be a PET film. The PET film has good light transmittance, wear resistance, and water resistance, and is a soft material, so that the PET film can effectively protect the camera module 4.

In a specific implementation, as shown in FIG. 3 and FIG. 4, the embedding structure 31 is a through hole, the through hole includes a first hole 312 and a second hole 313, a diameter of the first hole 312 is greater than a diameter of the second hole 313, the end that is of the camera module 4 and that is away from the housing 1 extends into the second hole 313, and the protection structure 6 is fastened to the first hole 312.

As shown in FIG. 4, because the diameter of the first hole 312 is greater than the diameter of the second hole 313, a step 314 may be formed between the first hole 312 and the second hole 313, and the protection structure 6 may be fastened on the step 314. Specifically, the protection structure 6 may be fastened and bonded to the step 314 through adhesive bonding. This facilitates fastening of the protection structure 6. After the end that is of the camera module 4 and that is away from the housing 1 extends into the second hole 313, a specific distance may be maintained between the camera module 4 and the protection structure 6. The distance may absorb tolerance accumulation of the components in the camera module 4, so that the camera module 4 is prevented from squeezing the protection structure 6 and therefore the protection structure 6 is prevented from being damaged.

In this embodiment, a thickness of the protection structure 6 is 0.1 mm, a depth b 1 of the first hole 312 is 0.2 mm, the protection structure 6 may be fastened and bonded to the step 314 by using adhesive, and a thickness of the adhesive layer 5 is 0.05 mm. After the protection structure 6 is fastened to the step 314 by using the adhesive layer 5, a height difference between a surface of a side that is of the protection structure 6 and that is away from the step 314 and the surface of the side that is of the cover 3 and that is away from the housing 1 is 0.05 mm, and the height difference may enable the protection structure 6 to be accommodated in the first hole 312 and to not protrude from the first hole 312. In this way, the protection structure 6 can be protected. In addition, the thickness b of the cover 3 is usually 0.5 mm, and the depth b1 of the first hole 312 is 0.2 mm. Therefore, a depth b2 of the second hole 313 is 0.3 mm. In this embodiment, a depth at which the camera module 4 extends into the second hole 313 is 0.1 mm, so that there is a distance of 0.2 mm between the camera module 4 and the protection structure 6. The distance may absorb tolerance accumulation of the components in the camera module 4, so that the camera module 4 is prevented from squeezing the protection structure 6 and therefore the protection structure 6 is prevented from being damaged.

It should be noted that, as shown in FIG. 1, in the existing electronic device having a photographing function, the cover 300 seals the camera module 400 between the cover 300 and the housing 100, and the specific gap a is reserved between the camera module 400 and the cover 300, where the gap a is usually 0.2 mm. In this embodiment, as shown in FIG. 3, the depth at which the camera module 4 extends into the second hole 313 is 0.1 mm, so that the cover 3 and the screen assembly 2 can move 0.3 mm in the direction toward the housing 1 as a whole. In this way, the thickness of the screen of the electronic device is reduced in a case in which the size of the camera module 4 is not changed.

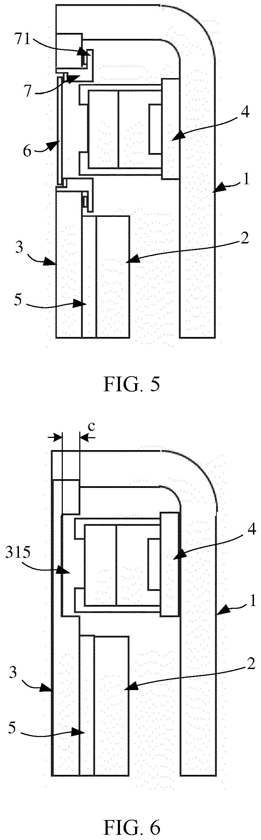

In a specific implementation, as shown in FIG. 5, the electronic device further includes an embedding member 7, and the protection structure 6 is fastened to the embedding structure 31 by using the embedding member 7. The embedding member 7 may be of a structure of a solid of revolution, a hole is provided in the embedding member 7, the protection structure 6 may be fastened to the hole, and the camera module 4 may extend into the hole. The embedding structure 31 is a through hole. When the camera module 4 directly extends into the through hole, a gap for absorbing tolerances of parts is maintained between the camera module 4 and a side wall of the through hole. The gap causes substances such as liquid or dust in an external environment to enter and pollute or damage the camera module 4. Therefore, in this embodiment, the embedding member 7 may be fastened and embedded in the through hole, to block the gap between the camera module 4 and the through hole and prevent the substances such as liquid and dust in the external environment from entering. In addition, the embedding member 7 can improve mounting stability of the camera module 4.

Specifically, as shown in FIG. 5, a flange 71 is disposed on the embedding member 7, where the flange 71 is fastened to a surface of one end that is of the cover 3 and that faces the housing 1. The embedding member 7 may increase a contact area between the embedding member 7 and the cover 3 by using the flange 71, to improve reliability of fastening between the embedding member 7 and the cover 3. The flange 71 may be fastened to the cover 3 through adhesive bonding.

In a specific implementation, as shown in FIG. 6, the embedding structure 31 is a groove 315, the groove 315 is disposed at the end that is of the cover 3 and that faces the camera module 4, and the end that is of the camera module 4 and that is away from the housing 1 extends into the groove 315. A depth of the groove 315 is less than the thickness of the cover 3. On one hand, the camera module 4 extends into the groove 315, so that the thickness of the screen can be reduced. On the other hand, a part that is on the cover 3 and that is located at the groove 315 is not penetrated, so that the camera module 4 can be protected. The cover 3 is a glass cover 3, and has good light transmittance, so that the camera module 4 can obtain a clear image through the cover 3 located in the groove 315.

The depth c of the groove 315 is 0.3 mm, and a depth at which the camera module 4 extends into the groove 315 is 0.1 mm, so that a distance between the camera module 4 and the part that is on the cover 3 and that is located in the groove 315 is 0.2 mm. The distance may absorb tolerance accumulation of the components in the camera module 4, so that the camera module 4 is prevented from squeezing the protection structure 6 and therefore the protection structure 6 is prevented from being damaged.

In addition, as shown in FIG. 1, in the existing electronic device having a photographing function, the cover 300 seals the camera module 400 between the cover 300 and the housing 100, and the specific gap a is reserved between the camera module 400 and the cover 300, where the gap a is usually 0.2 mm. In this embodiment, as shown in FIG. 6, the depth at which the camera module 4 extends into the groove 315 is 0.1 mm, so that the cover 3 and the screen assembly 2 can move 0.3 mm in the direction toward the housing 1 as a whole. In this way, the thickness of the screen of the electronic device is reduced in a case in which the size of the camera module 4 is not changed.

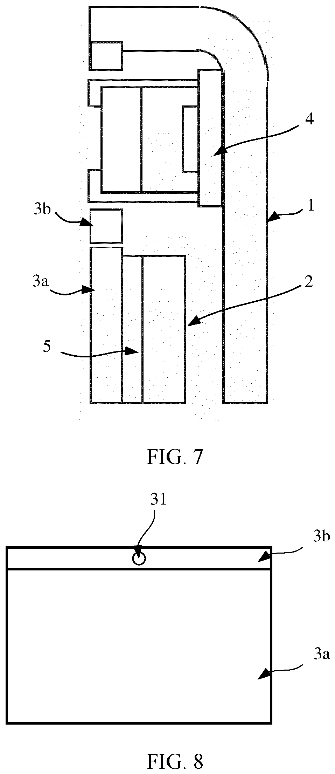

In a specific implementation, as shown in FIG. 7, the cover 3 includes a first plate 3a made of glass and a second plate 3b made of plastic, the first plate 3a and the second plate 3b are fastened and assembled together, and the embedding structure 31 is disposed on the second plate 3b.

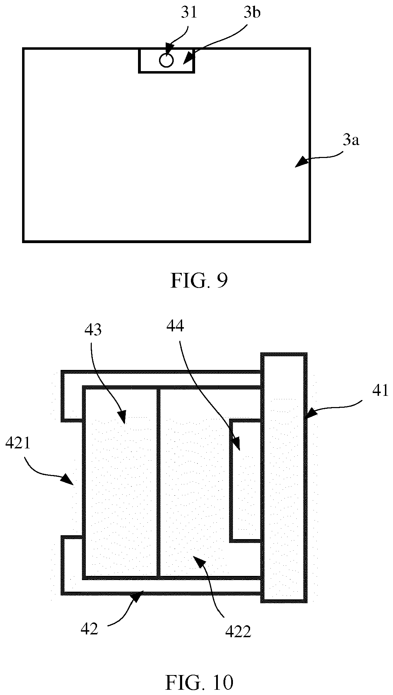

It should be noted that, when the cover 3 is fully made of glass, a yield of forming a hole or a groove on the glass is relatively low, and the cover 3 is likely to break, a parameter of the hole or the groove cannot meet a requirement for precision, and costs are wasted. Therefore, the cover 3 in this embodiment uses a structure assembling the first plate 3a made of glass and the second plate 3b made of plastic, so that the second plate 3b made of plastic may be provided with the hole or the groove. In this way, operation difficulty is greatly reduced, and a qualification rate of the cover 3 is significantly improved. The first plate 3a and the second plate 3b may be assembled and fastened by using processes such as adhesive bonding and fusing. As shown in FIG. 8, a length of the second plate 3b made of plastic may be the same as a length of the first plate 3a, and a width of the second plate 3b made of plastic is different from a width of the first plate 3a. Certainly, as shown in FIG. 9, the second plate 3b made of plastic may alternatively be only a part of a material located around the camera module 4.

In a specific implementation, as shown in FIG. 10 to FIG. 12, the camera module 4 includes a support member 42, a lens 43, an image processing apparatus 44, and a circuit board 41. An accommodating cavity 422 is formed in the support member 42. The lens 43 and the image processing apparatus 44 may be integrated into the accommodating cavity 422. The lens 43 may be configured to gather light. The image processing apparatus 44 may be a sensor configured to process and analyze an image signal. One end of the support member 42 is mounted on the circuit board 41, the other end of the support member 42 is provided with an opening 421, and a surrounding part of the opening 421 forms a threaded recessed structure 423. The threaded recessed structure 423 may be a multi-ring circular structure surrounding the opening 421, and each ring of the circular structure is gradually recessed from the end face of the camera module 4 to an inside of the camera module 4. In this way, relatively strong visual effect can be generated and user experience can be improved. In addition, a hollow-out area may be formed between each ring structure, so that visual effect is improved, and a weight of the camera module 4 may be reduced.

A material of the support member 42 may be metal, and the support member 42 made of metal may make an overall structure of the camera module 4 more stable, and has relatively strong wear resistance. In this embodiment, the material of the support member 42 may be specifically stainless steel.

The foregoing descriptions are merely preferred embodiments of this application, but are not intended to limit this application. A person skilled in the art may make various modifications and variations to this application. Any modification, equivalent replacement, or improvement made without departing from the spirit and principle of this application shall fall within the protection scope of this application.

## Claims

1. An electronic device, comprising: a housing, a screen assembly, a cover, and a camera module, wherein the screen assembly and the camera module are disposed in the housing, the cover is fastened to the housing and covers the screen assembly, the cover is provided with an embedding structure, and a part of the camera module extends into the embedding structure.

2. The electronic device according to claim 1, wherein the embedding structure is a through hole, one end that is of the camera module and that is away from the housing extends into the through hole, and an end face of the end that is of the camera module and that is away from the housing is flush with a surface of a side that is of the cover and that is away from the housing.

3. The electronic device according to claim 1, further comprising a protection structure, wherein the protection structure is fastened to the embedding structure, and covers one end that is of the camera module and that is away from the housing; or the protection structure is fastened to an end face of one end that is of the camera module and that is away from the housing.

4. The electronic device according to claim 3, wherein the embedding structure is a through hole, the through hole comprises a first hole and a second hole, a diameter of the first hole is greater than a diameter of the second hole, the end that is of the camera module and that is away from the housing extends into the second hole, and the protection structure is fastened to the first hole.

5. The electronic device according to claim 4, wherein a thickness of the protection structure is 0.1 mm, and a depth of the first hole is 0.2 mm.

6. The electronic device according to any one of claims 3 to 5, wherein the protection structure is a PET film.

7. The electronic device according to claim 3, wherein the electronic device further comprises an embedding member, and the protection structure is fastened to the embedding structure by using the embedding member.

8. The electronic device according to claim 7, wherein a flange is disposed on the embedding member, and the flange is fastened on a surface of one end that is of the cover and that faces the housing.

9. The electronic device according to claim 1, wherein the embedding structure is a groove, the groove is disposed at one end that is of the cover and that faces the camera module, and one end that is of the camera module and that is away from the housing extends into the groove.

10. The electronic device according to any one of claims 1 to 9, wherein the cover comprises a first plate made of glass and a second plate made of plastic, the first plate and the second plate are fastened and assembled together, and the embedding structure is disposed on the second plate.

11. The electronic device according to any one of claims 1 to 9, wherein the cover is a glass cover, and the glass cover is glued to the screen assembly.

12. The electronic device according to any one of claims 1 to 11, wherein the camera module comprises a support member, a lens, an image processing apparatus, and a circuit board, one end of the support member is mounted on the circuit board, the other end of the support member is provided with an opening, and a surrounding part of the opening forms a threaded recessed structure.

13. The electronic device according to claim 12, wherein a material of the support member is metal.
